Europäisches Patentamt

European Patent Office

Office européen des brevets

(11) Veröffentlichungsnummer: **0 396 986**
**A2**

(12) **EUROPÄISCHE PATENTANMELDUNG**

(21) Anmeldenummer: **90108149.7**

(22) Anmeldetag: **28.04.90**

(51) Int. Cl.[5]: **C04B 35/46, C04B 35/00**

(30) Priorität: **12.05.89 DE 3915496**

(43) Veröffentlichungstag der Anmeldung:
**14.11.90 Patentblatt 90/46**

(84) Benannte Vertragsstaaten:
**AT BE DE ES FR GB IT NL SE**

(71) Anmelder: **BAYER AG**

**D-5090 Leverkusen 1 Bayerwerk(DE)**

(72) Erfinder: **Freudenberg, Bernhard, Dr.**
**Sesslacher Weg 11**
**D-8630 Coburg(DE)**
Erfinder: **Thometzek, Peter, c/o Bayer Italia**
**S.p.A.,**
**Centre Sv. Ceramica, Via San Giovanni**
**Evangelista**
**I-41040 Spezzano di Fiorano (MI)(IT)**

(54) **Rohstoffmischung mit verbesserten Verarbeitungseigenschaften, Verfahren zu deren Herstellung sowie deren Verwendung.**

(57) Die vorliegende erfindung betrifft Rohstoffmischungen, bestehend aus modifizierten keramischen Rohstoffen mit verbesserten Verarbeitungseigenschaften, Verfahren zu deren Herstellung sowie deren Verwendung.

EP 0 396 986 A2

## Rohstoffmischung mit verbesserten Verarbeitungseigenschaften, Verfahren zu deren Herstellung sowie deren Verwendung

Die vorliegende Erfindung betrifft Rohstoffmischungen, bestehend aus modifizierten keramischen Rohstoffen mit verbesserten Verarbeitungseigenschaften, Verfahren zu deren Herstellung sowie deren Verwendung.

Die Dispergierung keramischer Rohstoffe in anorganischen oder organischen Medien (Dispersionsmittel) ist ein üblicher Zwischenschritt in der keramischen Formgebung, so z.B. beim Schlickerguß, Folienguß, Spritzguß, Extrudieren oder beim Sprühtrocknen von Schlickern. In allen Fällen ist die Qualität der Dispergierung mitentscheidend bezüglich der Verarbeitungseigenschaften und der Qualität des resultierenden Sinterformkörpers. Eine vollständige und Langzeit-stabile Dispergierung trägt u.a. bei zu einer Reduktion der Ausschußquoten, zu einer Festigkeitsanhebung, zu kürzeren Brennzyklen und zu geringeren Sinterschwindungen aufgrund der höheren Gründichte, d.h. besser Maßhaltigkeit.

Besonders problematisch ist die Erzielung einer vollständigen und gleichzeitig Langzeit-stabilen Dispergierung bei Rohstoffmischungen, bestehend aus chemisch unterschiedlichen Komponenten. Die Probleme der Agglomeration, der Heterokoagulation und der Entmischung von mehrkomponentigen Suspensionen versucht man im allgemeinen durch Dispergiermittelzugabe und pH-Einstellung (falls es sich um ein wäßriges Dispersionsmittel handelt) zu kontrollieren.

A.S. Rao, "Effect of pH on the Suspension Stability of Alumina, Titania und their Mixtures" Ceramics International 13 (1987), S. 233-241, untersucht die Stabilität von wäßrigen $Al_2O_3$ + $TiO_2$-Suspensionen, indem er den pH über einen weiten Bereich variiert Die Suspension ist bei pH 2 am stabilsten, ein wegen der Korrosivität auch gegenüber dem Formenwerkstoff Gips unpraktikabler Weg. Zudem wird $Al_2O_3$ bei pH ≦ 5 angelöst. Durch den Einsatz von kommerziellen Verflüssigern auf Aminbasis wurde keine Verbesserung gegenüber den verflüssigerfreien Varianten erzielt, A.S. Rao, "Effect of Surface Active Agents on the Elektrokinetic and Rheological Behavior of Alumina and Titania Slips" Ceramics International 14 (1988), S. 141-146.

N.M. Filatova u.a., "Rheological and Technological Properties of Aqueous Slips Based on Magnesium Aluminate and Aluminum Titanate" Colloid. J. USSR (engl. Übersetzung) 46 (1984) S. 729-732, verschlikkern $MgAl_2O_4$ + $Al_2TiO_5$ in Wasser. Auch sie empfehlen den sauren Bereich, pH 2,5-4, um zu einem verarbeitbaren Schlicker zu gelangen. Die HCl-Zugabe führt zu verstärkter Korrosion und einer unerwünschten Erhöhung der Elektrolytkonzentration im Schlicker.

I.A.Aksay u.a., "Uniformity of $Al_2O_3$-$ZrO_2$ Composites by Colloidal Filtration" J. Amer Ceram. Soc. 66 - (1983), S. C190-C192, stellen eine hochfeste $Al_2O_3$-Keramik mit feindispersem $ZrO_2$ (30 Vol-%) her über den Weg des wäßrigen Schlickers. Die optimale Schlickerstabilität wird bei einer pH-Einstellung von 2-3,5 gefunden. Der pH verändert sich bei der Lagerung des Schlickers.

E.M. DeLiso u.a., "Application of Electrokinetic Properties to the Fabrication of an Alumina-Zirconia Composite" Advanced Ceram. Mater. 3 (1988), S. 407-410, beschreiben die sich widersprechenden Anforderungen an eine Suspension, die gleichzeitig eine optimale $Al_2O_3$-Verflüssigung sowie eine optimale $ZrO_2$-Verflüssigung gewährleisten soll. Da beide Komponenten in einer Mischung nicht optimal verflüssigt werden können, schlagen die Autoren den aufwendigen Weg vor, die Einzelkomponenten separat zu verschlickern, um dann beide Suspensionen zu mischen.

Y.E Pivinskii u.a., "Obtaining Corundum-Zircon Suspension, their Rheological and Bonding Properties" Ogneupory (engl. Übersetzung), 6 (1984), S 347-351 (engl. Übersetzung), geben für die Verschlickerung von $Al_2O_3$ + $ZrSiO_4$, welches beim Sintern zu Mullit und $ZrO_2$ reagiert, ein enges pH-Intervall von pH 2,5-3,5 an.

P.E. Debely u.a., "Preparation and Sintering Behavior of Fine-Grained $Al_2O_3$-$SiO_2$ Composite" J. Amer. Ceram. Soc. 68 (1985), S. C76-78, bedienen sich der Heterokoagulation von $Al_2O_3$ und $SiO_2$. Sie belegen im Schlicker die bei pH 3 positiv geladenen $Al_2O_3$-Partikel, mittlerer Durchmesser 0,3 $\mu$m, mit negativ geladenen 0,02 $\mu$m großen $SiO_2$-Partikeln. Dies erfordert eine langsame kontrollierte Einbringung der $Al_2O_3$-Suspension in die $SiO_2$-Suspension. Das überschüssige $SiO_2$ wird abzentrifugiert. Auf diese Wise lassen sich keine im trockenen Zustand lagerfähigen und redispergierbaren Pulver herstellen.

E.M. Rabinovich u.a., "Slip casting of Silicon Nitride for Pressureless Sintering" J. Mater. Sci. 17, (1982), S. 323-328, vergleichen die Verschlickerung von $Si_3N_4$ + $MgAl_2O_4$ mittels pH-Einstellung bzw. durch Zugabe von kommerziellen Verlüssigern. Sowohl im sauren als auch im alkalischen Bereich ergeben sich relativ flüssige Suspensionen. Wegen Gasentwicklung in sauren Bereichen wählen die Autoren für den Schlickerguß von Siliciumnitrid-Tiegeln den alkalischen Bereich. Die hohe lineare Sinterschwindung von 20-25 % beweist eine unbefriedigende Dispersionsqualität.

Ein gundsätzlich anderer Weg wird von M. Persson,in der WO-A 88/00577 vorgeschlagen. Hier wird Sinteradditiv (in den Beispielen ausschließlich Al) auf die dominierende Pulverkomponente aufgefällt (in den Beispielen $Si_3N_4$, Si bzw. $ZrO_2$). In einem weiteren Beispiel wird die $Si_3N_4$-und die Si-Pulveroberfläche durch Al-Beschichtung an die isoelektrischen Punkte der zusätzlich vorliegenden $Al_2O_3$- (2 %) und $Y_2O_3$-Pulver (6 %) angepaßt. Die Beschichtung der Pulver erfolgt in mehreren Schritten (Beispiel 1): Das Pulver wird in eine Aluminiumisopropoxid/Hexanlösung gerührt und anschließend in einer Mühle dispergiert. Die Suspension wird mindestens 30 min bei 120°C eingedampft. Gemäß Anspruch 1 ist eine Kalzinierung notwendig. Der getrocknete Kuchen darf nicht gemahlen werden (S. 5, Z. 27). Der keramische Schlicker darf für die weiter Verarbeitung lediglich gerührt werden (S. 5, Z. 27). Dieser Verfahrensschritt reicht jedoch nicht aus, um die Trockenagglomerate, zusätzlich zusammenzementiert durch die Aluminiumoxid/Hydroxidauffällungen, zu zerstören. Das beschriebene rißfreie Trocknen des Scherbens läßt keine Aussage zu über die Qualität der redispergierten beschichteten Rohstoffe.

Es wird die Möglichkeit angedeutet, anstelle des Aluminiums andere Kationen, insbesondere Silicium, einzusetzen. Die Ausführungsbeispiele beschränken sich allerdings auf Aluminiumisopropoxid. Weitere Angaben zu den Vor- bzw. Nachteilen von verschiedenen Kationenverbindungen sind nicht erwähnt. Beschichtungsvarianten bei mehrkomponentigen Systemen werden nicht offenbart.

Ziel der vorliegenden Erfindung ist es, eine Rohstoffmischung bereitzustellen, welche die beschriebenen Nachteile nicht aufweist.

Überraschenderweise wurde eine Rohstoffmischung gefunden, bestehend aus modifizierten Rohstoffen, welche die beschriebenen Nachteile nicht aufweist. Gegenstand der Erfindung ist eine keramische Rohstoffmischung, bestehend aus mindestens zwei chemisch unterschiedlichen Rohstoffkomponenten, mit verbesserten Verarbeitungseigenschaften, dadurch gekennzeichnet, daß mindestens zwei Rohstoffkomponenten die gleiche Kationensorte an der Oberfläche aufweisen, wobei mindestens eine dieser Rohstoffkomponenten mit dieser Kationensorte beschichtet ist und die Beschichtung, gerechnet als Kationenoxid 0,01-6 Gew.-%,, bezogen auf die beschichtete Pulverkomponente beträgt und alle Rohstoffkomponenten eine Oberfläche mit einem isoelektrischen Punkt ≤ pH 7 aufweisen.

Um eine Verbesserung der Verarbeitungseigenschaften zu erzielen, genügen im allgemeinen 0,01-6 Gew.-% beschichtende Kationenverbindung, gerechnet als Kationenoxid, bezogen auf die beschichtete Pulverkomponente.

Bevorzugt beträgt die Beschichtung 0,05 bis 4 Gew.-%, gerechnet als Kationenoxid und bezogen auf die beschichtete Pulverkomponente.

Bei der Beschichtung handelt es sich zum Zeitpunkt der Einarbeitung in das Dispersionsmittel um eine überwiegend anorganische Verbindung, bevorzugt Oxide, Hydroxide und Oxidhydrate. Die Beschichtung kann aber auch aus anderen im Dispersionsmittel schwer löslichen Verbindungen bestehen, wie z.B. aus gewissen Carbonaten oder Phosphaten. Eine feste chemische Bindung der Beschichtung an die Rohstoffkomponente ist vorteilhaft, um den gegebenenfalls trockenen Rohstoff lagerfähig und redispergierbar zu gestalten. Die spezifische Pulveroberfläche sollte durch die Beschichtung nur minimal angehoben werden, um den Dispergiermittelbedarf, bezogen auf den Feststoffgehalt in der Suspension nicht anzuheben. Eine Anhebung der spezifischen Pulveroberfläche von 11,5 auf 64 $m^2/g$, wie von K. Kishi, M. Persson u.a., "Interaction of Aluminium-Iso-Propoxide Solution and $Si_3 N_4$-Powder" J. Ceram. Soc. Jpn. Inter Ed. 96 - (1988), S. 687-689 beschrieben, ist unbedingt nachteilig bezüglich Dispergiermittelbedarf, Schlickerrheologie und Gründichte.

Es hat sich in einzelnen Fällen als vorteilhaft erwiesen, die einzelnen Rohstoffmischungen separat vor der Einarbeitung in die Mischung zu beschichten. Dadurch können die Beschichtungsbedingungen rohstoffspezifisch optimiert werden.

Gemäß einer bevorzugten Ausführungsform sind die Kationen Si, Ti, Zr, Sn und/oder Fe.

Es hat sich gezeigt, daß eine wesentliche Verbesserung bereits erzielt wird, wenn nur einzelne, d.h. nicht sämtliche Rohstoffkomponenten, eine Beschichtung aufweisen. Es wurde gefunden, daß eine Anpassung der Oberflächenchemie der beiden vom isoelektrischen Punkt her am weitesten entfernt liegenden Komponenten am wirksamsten ist bezüglich einer Verbesserung der Verarbeitungseigenschaften. Die Verflüssigung der Suspension ergab die besten Ergebnisse, wenn die isoelektrischen Punkte sämtlicher Komponenten-Oberfläche bei pH ≤ 7 liegen.

Insbesondere bei $Al_2O_3$-haltigen Rohstoffmischungen wurde eine Verbesserung der Dispersionsqualität durch die Beschichtung der $Al_2O_3$-Komponente erzielt, wenn der isoelektrische Punkt der Beschichtung bei pH ≤ 7 lag. Das nachteilige Verhalten von unbeschichteten Al-Verbindungen (reines $Al_2O_3$: isoelektrischer Punkt pH ~ 9) macht sich bei einem Anteil von ≧ 5 Gew.-%, insbesondere von ≧ 15 Gew.-%, gerechnet als $Al_2O_3$ in der Rohstoffmischung bemerkbar.

Bevorzugt weist somit die erfindungsgemäße Rohstoffmischung mindestens 5 Gew.-%, bevorzugt mindestens 15 Gew.-%, Aluminiumverbindungen, gerechnet als $Al_2O_3$, auf. Besonders gute Ergebnisse werden erzielt mit Rohstoffmischungen, die nach dem Sintern Aluminiumtitanat oder Aluminiumtitanat-Mischkristalle zu mehr als 30 Gew.-% enthalten.

Es hat sich zudem als vorteilhaft erwiesen, die härteste Rohstoffkomponente mit einer weicheren Kationenverbindung zu beschichten, da auf diese Weise als zusätzlicher Effekt der Abrieb reduziert wird an Leitungen, Behältern, Rühr-, Knet- und Mahlaggregaten. Das reduziert die eingetragenen Verunreinigungen, wie z.B. Alkalien und Erdalkalien von Hartporzellantrommeln. Die genannte Verunreinigungen beeinträchtigen die Hochtemperaturfestigkeit von gewissen Werkstoffen, z.B. Siliciumnitrid. Unter diesem Gesichtspunkt ist z.B. $Al_2O_3$ als Beschichtung weniger vorteilhaft.

Eine bevorzugte Ausführungsform bezieht sich auf Aluminiumtitanat-Rohstoffmischungen, z.B. für die Verarbeitung in wäßrigen Schlickern. Folgende Beschichtungsvarianten haben sich dabei als besonders vorteilhaft erwiesen, wenn man eine Rohstoffmischung betrachtet, bestehend aus $Al_2O_3$-, $TiO_2$-, $SiO_2$- und $Fe_2O_3$ Pulvern.

Tabelle I

| Bevorzugte Beschichtungsvarianten für eine $Al_2O_3/TiO_2/SiO_2/FeO_3$-Rohstoffmischung | | | | |
|---|---|---|---|---|
| | Rohstoffkomponente | | | |
| | $Al_2O_3$ | $TiO_2$ | $SiO_2$ | $Fe_2O$ |
| Mohs'sche Härte | 9 | 6 | $\leqq 6,5$ | 6,5 |
| isoelektrischer Punkt | pH~9 | pH~6 | pH~2 | pH~6,5 |
| Fall 1: $TiO_2$-Beschicht. | X | | (X) | (X) |
| Fall 2: $SiO_2$-Beschicht. | X | (X) | | (X) |
| Fall 3: $Fe_2O_3$-Beschicht. | X | (X) | (X) | |
| X : unbedingt beschichtet | | | | |
| (X) : als Option | | | | |

In wäßrigen Suspensionen wird im allgemeinen eine erhöhte Elektrolytkonzentration gemessen, bedingt durch wasserlösliche Salze in den keramischen Pulvern. So sind ca. 50 Gew.-% des $Na_2O$ in feinst gemahlenen $Al_2O_3$-Pulvern wasserlöslich. Die Beschichtungen tragen zu einer reduzierten Elektrolytlöslichkeit bei, was sich zusätzlich positiv auf die Stabilisierung der Suspension auswirkt. Die reduzierte Elektrolytlösichkeit macht sich indirekt bemerkbar als reduzierte spezifische elektrische Leitfähigkeit der Suspension.

Bevorzugt besteht die erfindungsgemäße Beschichtung aus einer überwiegend anorganischen, schwer löslichen Verbindung bzw. Verbindungen.

Gegenstand der Erfindung sind auch Verfahren zur Herstellung der erfindungsgemäßen Rohstoffmischungen. Die Herstellung der keramischen Rohstoffmischung, die aus mindestens zwei chemisch unterschiedlichen Rohstoffkomponenten besteht und dadurch gekennzeichnet ist, daß mindestens zwei Rohstoffkomponenten die gleiche Kationensorte an der Oberfläche aufweisen, wobei mindestens eine dieser Rohstoffkomponenten mit dieser Kationensorte beschichtet ist und die Beschichtung, gerechnet als Kationenoxid, 0,01-6 Gew.-%, bezogen auf die beschichtete Pulverkomponente beträgt und alle Rohstoffkomponenten eine Oberfläche mit einem isoelektrischen Punkt $\leqq$ pH 7 aufweisen, erfolgt durch Trockenmischung, Naßmischung, Verwirbeln, Rühren, Mahlen, Kneten, Extrudieren oder andere in der Keramik übliche Verfahren. Die Beschichtung der gewünschten Rohstoffkomponenten wird vorzugsweise getrennt vor dem Mischvorgang vorgenommen. Zur Beschichtung können alle Verfahren angewendet werden, die zu einem schwerlöslichen Überzug der genannten Verbindungen auf die Rohstoffkomponenten führen, bevorzugt durch Auffällen, Aufsprühen und/oder Aufmahlen. Besonders vorteilhaft hat sich das Aufsprühen von Verbindungen, wie z.B. hydrolysierbaren metallorganischen Verbindungen, und das anschließende Aufmahlen in einer Strahlmühle gezeigt.

Besonders bevorzugt ist die Ausführungsform, bei der die Beschichtung mit schwerlöslichen oder unter den Verfahrensbedingungen schwerlösliche anorganische Verbindungen bildende Kationenverbindungen vorgenommen wird. Besonders gute Ergebnisse wurden erzielt, wenn die Beschichtung durch Aufbringen mit einer Kationen-organischen Verbindung und/oder Solen und anschließender Strahlmahlung, bevorzugt Dampfstrahlmahlung, erfolgt.

Ein bevorzugtes Verfahren zur Beschichtung besteht darin, daß das $Al_2O_3$-Pulver mit Siliciumtetraethylester besprüht wird. Eine Lösung des Alkoxids in einem wasserarmen organischen Lösungsmittel ist hierbei nicht erforderlich (WO-A 88/00577, S. 9, Z. 6). Das besprühte Pulver wird in einer Dampfstrahlmühlung gemahlen, was gleichzeitig die gleichmäßige Verteilung der Beschichtung, die Hydrolyse und die Desagglomeration fördert. Die Gefahr des Zusammenzementierens besteht somit nicht. Wie den weiter unten folgenden Beispielen zu entnehmen ist, kann nach diesen Verfahren eine Beschichtung auf getragen werden, welche auch nach 12-stündiger Naßmahlung signifikante Vorteile aufweist (WO-A 88/00577, S. 5, Z. 27/28). Anstelle von Siliciumalkoxiden können ebenfalls Siliciumchloride oder Chlorsilane verwendet werden. Auch Kieselsole sind zur $SiO_2$-Beschichtung geeignet.

Gegenstand dieser Erfindung ist auch die Verwendung der erfindungsgemäßen Rohstoffmischung zur Herstellung von keramischen Werkstoffen und Bauteilen. Die Verwendung der erfindungsgemäßen Rohstoffmischung erstreckt sich auf den gesamten Bereich der Keramik, Oxid- und Nichtoxidkeramik, wie z.B. Ingenieurkeramik, Biokeramik, Elektronik-, Magneto- und Optokeramik, Feuerfestkeramik, Schneidwerkzeuge etc.

Eine bevorzugte Ausführungsform dieser Erfindung besteht in der Verwendung der erfindungsgemäßen Rohstoffmischung zur keramischen Formgebung über die elektrophoretische Abscheidung.

Die elektrophoretische Abscheidung hat den Vorteil gegenüber konventionellem Schlickerguß, daß sie ohne den Formenwerkstoff Gips mit seinen bekannten Nachteilen auskommt. Voraussetzung für die homogene Abscheidung ohne Entmischung der verschiedenen Rohstoffkomponenten ist deren gleichsinnige und näherungsweise gleichstarke elektrische Aufladung in der Suspension. Diese Forderung kann durch die vorgeschlagene Oberflächenmodifikation erfüllt werden.

Vorteilhaft ist auch die Verwendung der erfindungsgemäßen Rohstoffmischung zur Herstellung von keramischen Schichten oder Bauteilen über den Weg des Flammenspritzens oder des Plasmaspritzens.

Als Vorteile der erfindungsgemäßen Rohstoffmischungen mit modifizierten Rohstoffen wurde zusammenfassend gefunden:

Nach erfolgter Vereinheitlichung der Oberflächenchemie der verschiedenen Rohstoffkomponente kann man häufig auf bereits bekannte, kommerziell verfügbare Verflüssiger zurückgreifen, die gegebenenfalls Alkali-, Phosphat- und Sulfat-frei sind.

Die benötigte Dispergiermittelkonzentration zur Einstellung einer stabilen Suspension wird im allgemeinen reduziert (muß aber nicht immer der Fall sein). Die geringere Elektrolytkonzentration, sichtbar auch als geringere spezifische elektrische Leitfähigkeit, ist nicht nur kostengünstig; sie wirkt sich zudem positiv auf die elektrostatische Stabilisierung aus.

Die Viskosität im allgemeinen sowie die Strukturviskosität im besonderen (ein Anzeichen für Agglomerationsneigung) wird herabgesetzt. Neben einer besseren Homogenität erlaubt dies auch eine Erhöhung der Feststoffkonzentration in der Suspension, was von wirtschaftlichem Intersse ist.

Die verbesserte Dispersionsqualität bewirkt eine Anhebung der Gründichte, was wiederum eine geringere Sinterschwindung, d.h. bessere Maßhaltigkeit des Sinterformkörpers zur Folge hat. Einhergehend mit der besseren Grünlingshomogenität wird auch eine Reduzierung der Rißanfälligkeit beobachtet.

Als weiterer Vorteil, insbesondere bei Beschichtung der härtesten Komponente, z.B. $Al_2O_3$, mit einer weicheren, z.B. $SiO_2$, ist der reduzierte Abrieb der Auskleidungen, Rühr-, Mahl- und Knetelemente zu nennen. Das hat neben einer längeren Lebensdauer auch einen reduzierten Verunreinigungseintrag zur Folge.

Die geringere Elektrolytlöslichkeit der beschichteten Pulver in wäßrigen Suspensionen hat einen zusätzlichen Stablisierungseffekt.

Durch die geringe, im allgemeinen versatzeigene Additivkonzentration wird der Pulververarbeiter nicht in der freien Wahl der Versatzzusammensetzung eingeschränkt.

Im folgenden wird die Erfindung beispielhaft erläutert, ohne daß hierin eine Einschränkung zu sehen ist.

Beispiele

Die Erfindung soll an folgenden Beispielen veranschaulicht werden, ohne daß dadurch der Geltungsbereich eingeschränkt würde. Die Beispiele beziehen sich auf die Patentanmeldung DE-A 3 814 079, bezüglich einer Aluminiumtitanat-Keramik. Die Rohstoffe werden so eingewogen, daß die Rohstoffmischung enthält: 56,3 Gew.-% $Al_2O_3$, 39,3 Gew.-%, $TiO_2$, 2,4 Gew.-% $SiO_2$ und 2 Gew.-% $Fe_2O_3$. Der wäßrige Schlicker, Feststoffgehalt 70 Gew.-%, mit einem alkalifreiem Dispergiermittel auf der Basis einer Polycarbonsäure wird in einer 3l-Mühle aus Hartporzellan, gefüllt mit 2,8 kg 85 %igen $Al_2O_3$-Mahlkugeln 12 h

gemahlen. Nach Ermittlung der Schlickerdaten wird er in Gips formen vergossen.

Trotz deren Bedeutung ist eine unmittelbare quantitative Erfassung der Qualität einer Dispergierung zur Zeit noch nicht möglich. Es steht aber eine Vielzahl von indirekten Meßmethoden zur Verfügung:

Die Rheologie der Suspension erlaubt Rückschlüsse auf die Agglomerationsneigung. So deutet eine ausgeprägte Strukturviskosität hin auf zunehmende Agglomeratbildung bei kleineren Schergeschwindigkeiten; Thixotropie weist auf Agglomeratbildung hin in der ruhenden Suspension. Eine erhöhte Gründichte des ungebrannten keramischen Scherbens ist ein Indiz für gute Desagglomeration, eben so wie dichte Sedimentpackungen bei Sedimentationsversuch. Durch gute Dispergierung lassen sich homogene keramische Gefüge, frei von Makrodefekten, erzielen.

Beispiel 1(Vergleich)

Die Rohstoffmischung basiert auf klassischen unbeschichteten Rohstoffen mit einer feinkörnigen $Al_2O_3$-Qualität. Die Schlickerparameter sowie die Gründichte sind der Tabelle II zu entnehmen.

Beispiel 2

Der $Al_2O_3$-Rohstoff wurde mit 0,5 Gew.-% $SiO_2$ beschichtet. Dies erfolgte durch Besprühen mit der entsprechenden Menge unerverdünntem Siliciumtetraethylester und anschließender Dampfstrahlmahlung. Ein zusätzlicher Kalzinierungsschritt ist nicht erforderlich.

Auffallend ist der um 33 % niedrigere Verflüssigerbedarf, die deutlich niedrigere Viskosität (an der Grenze des Brookfield-Meßbereichs), welche eine deutliche Anhebung des Feststoffgehaltes zulassen würde, die überproportional gesunkene spezifische elektrische Leitfähigkeit, die um 0,05 g/cm$^3$ gestiegene Gründichte und der um über 50 Gew.-% reduzierte Mahlkugelabrieb.

Beispiel 3

Zusätzlich zum $SiO_2$-beschichteten $Al_2O_3$ wurde ein mit 0,1 Gew.-% $SiO_2$ beschichtetes $TiO_2$ eingesetzt. Die Beschichtung erfolgte gemäß dem oben beschriebenen Verfahren. Während die Gründichte durch die Beschichtung von $Al_2O_3$ und $TiO_2$ noch zunimmt, verschlechtern sich die rheologischen Parameter gegenüber dem Beispiel 2.

Beispiel 4(Vergleich)

Im Gegensatz zu Beispiel 1 wurde eine grobkörnigere $Al_2O_3$-Variante verarbeitet.

Beispiel 5

Der $Al_2O_3$-Rohstoff, entsprechend Beispiel 4, wurde wiederum mit 0,5 Gew.-% $SiO_2$ beschichtet (siehe Beispiel 2). Die Reduzierung des Verflüssigerbedarfs und des Mahlkugelabriebs gegenüber dem Vergleich 4 fallen noch deutlicher aus als in den Beispielen 1 und 2. Ansonsten bestätigen sich die oben aufgezeigten Tendenzen.

Beispiel 6

Der $Al_2O_3$-Rohstoff wurde in diesem Fall mit 0,2 Gew.-% $TiO_2$ beschichtet. Dazu wurde das $Al_2O_3$ mit Ti-n-Butylat besprüht und dampfstrahlgemahlen.

Auch diese Variante zeigt die gleichen Tendenzen, wenn auch nicht so ausgeprägt wie das Beispiel 5.

Die Beschichtung der $Al_2O_3$-Pulveroberfläche trägt am meisten zur Verbesserung der Verarbeitungseigenschaften bei. Zudem ist die $Al_2O_3$-Komponente weitgehend für den Mahlkugelabrieb verantwortlich. Am vorteilhaftesten ist die Beschichtung der $Al_2O_3$-Oberfläche mit $SiO_2$.

Tabelle II: Rohstoffmischungen, Charakterisierung und Dispergierung

| Rohstoffmischung | optimale Ver-flüssiger-Konzentration $\left[\dfrac{\text{g-Wirksubstanz}}{100\ \text{g Feststoff}}\right]$ | Brookfield Viskositäten 0,3UpM 3UpM 30UpM [mPa.s] | | | spezifisch elektrische Leitfähigkeit [mS/cm] | Grün-dichte [g/cm³] | Mahl-Kugel-abrieb [g/12h] |
|---|---|---|---|---|---|---|---|
| **Beispiel 1 (Vergleich)**<br>$Al_2O_3$ (Qualität A) $x_{50}$ <0,5 μm unbeschichtet<br>$TiO_2$, $x_{50}$ <0,5 μm, unbeschichtet<br>$SiO_2$, $x_{50}$ <0,3 μm, unbeschichtet<br>$Fe_2O_3$, $x_{50}$ <0,3 μm, unbeschichtet | 0,3 | (Spindel 1)<br>2400 | 600 | 140 | 1,34 | 2,34 | 1,60 |
| **Beispiel 2 ($Al_2O_3$ mit $SiO_2$ beschichtet)**<br>$Al_2O_3$ (Qualität A) $x_{50}$ <0,5 μm, 0,5 Gew.-% $SiO_2$<br>$TiO_2$, $x_{50}$ <0,5 μm<br>$SiO_2$ und $Fe_2O_3$, wie Beispiel 1 | 0,2 | (Spindel 1)<br>140 | 12 | 1 | 0,74 | 2,39 | 0,75 |
| **Beispiel 3 ($Al_2O_3$ u.$TiO_2$ mit $SiO_2$ beschichtet)**<br>$Al_2O_3$ (Qualität A) $x_{50}$ < 0,5 μm, 0,5 Gew. $SiO_2$<br>$TiO_2$, $x_{50}$ < 0,5 μm, 0,1 Gew.-% $SiO_2$<br>$SiO_2$ und $Fe_2O_3$, wie Beispiel 1 | 0,2 | (Spindel 1)<br>1600 | 270 | 80 | 0,83 | 2,41 | 0,80 |

7

EP 0 396 986 A2

Tabelle II: Rohstoffmischungen, Charakterisierung und Dispergierung (Fortsetzung)

| Rohstoffmischung | optimale Ver- flüssiger- Konzentration $\left[\dfrac{\text{g-Wirksubstanz}}{\text{100 g Feststoff}}\right]$ | Brookfield Viskositäten 0,3UpM 3UpM 30UpM [mPa.s] | spezifisch elektrische Leitfähig- keit [mS/cm] | Grün- dichte [(g/cm$^3$] | Mahl- Kugel- abrieb [g/12h] |
|---|---|---|---|---|---|
| **Beispiel 4 (Vergleich)** $Al_2O_3$ (Qualität B) $x_{50}$ <1,0 µm, unbeschichtet $TiO_2$, $x_{50}$ <0,5 µm, unbeschichtet $SiO_2$ und $Fe_2O_3$, wie Beispiel 1 | 0,3 | (3500  800  200) interpoliert | 1,26 | 2,27 | 0,65 |
| **Beispiel 5** ($Al_2O_3$ mit $SiO_2$ beschichtet) $Al_2O_3$ (Qualität B)$x_{50}$, <1,0 µm, 0,5 Gew.-% $SiO_2$ $TiO_2$, $x_{50}$ <0,5 µm, unbeschichtet $SiO_2$ und $Fe_2O_3$, wie Beispiel 1 | 0,1 | (Spindel 1) 220  1100  55 | 0,55 | 2,36 | 0,15 |
| **Beispiel 6** ($Al_2O_3$ mit $TiO_2$ beschichtet) $Al_2O_3$ (Qualität B)$x_{50}$ <1,0 µm, 0,2 Gew.-% $TiO_2$ $TiO_2$, $x_{50}$ <0,5 µm, unbeschichtet $SiO_2$ und $Fe_2O_3$, wie Beispiel 1 | 0,15 | (Spindel 1) 700  220  80 | 0,72 | 2,32 | 0,45 |

**Ansprüche**

1. Keramische Rohstoffmischung, bestehend aus mindestens zwei chemisch unterschiedlichen Rohstoffkomponenten, mit verbesserten Verarbeitungseigenschaften, dadurch gekennzeichnet, daß mindestens zwei Rohstoffkomponenten die gleiche Kationensorte an der Oberfläche aufweisen, wobei mindestens eine dieser Rohstoffkomponenten mit dieser Kationensorte beschichtet ist und die Beschichtung, gerechnet als Kationenoxid, 0,01 bis 6 Gew.-%, bezogen auf die beschichtete Pulverkomponente, beträgt und alle Rohstoffkomponenten eine Oberfläche mit einem isoelektrischen Punkt ≦ pH 7 aufweisen.

2. Keramische Rohstoffmischung gemäß Anspruch 1, dadurch gekennzeichnet, daß die Beschichtung 0,05 bis 4 Gew.-%, gerechnet als Kationenoxid und bezogen auf die beschichtete Pulverkomponente, beträgt.

3. Keramische Rohstoffmischung gemäß einem oder mehrerer der Ansprüche 1 oder 2, dadurch gekennzeichnet, daß die Rohstoffmischung mindestens 5 Gew.-%, bevorzugt mindestens 15 Gew.-%, Aluminiumverbindungen, gerechnet als $Al_2O_3$, enthält.

4. Keramische Rohstoffmischung gemäß einem oder mehrer der Ansprüche 1 bis 3, dadurch gekennzeichnet, daß die Rohstoffmischung nach dem Sintern Aluminiumtitanat oder Aluminiumtitanat-Mischkristalle zu mehr als 30 Gew.-% enthält.

5. Keramische Rohstoffmischung gemäß einem oder mehrerer der Ansprüche 1 bis 4, dadurch gekennzeichnet, daß die Beschichtung aus einer überwiegend anorganischen, schwer löslichen Verbindung bzw. Verbindungen besteht.

6. Keramische Rohstoffmischung gemäß einem oder mehrerer der Ansprüche 1 bis 5, dadurch gekennzeichnet, daß die Kationen die Beschichtung bevorzugt Si, Ti, Zr, Sn und/oder Fe sind.

7. Verfahren gemäß einem oder mehrerer der Ansprüche 1 bis 6, dadurch gekennzeichnet, daß die Beschichtung der zu beschichtenden Rohstoffkomponenten einzeln oder zusammen durch Auffällen, Aufsprühen und/oder Aufmahlen vorgenommen wird.

8. Verfahren gemäß Anspruch 7, dadurch gekennzeichnet, daß die Beschichtung mit schwerlöslichen oder unter den Verfahrensbedingungen schwerlösliche anorganische Verbindungen bildenden Kationenverbindungen vorgenommen wird.

9. Verfahren gemäß einem der Ansprüche 7 oder 8, daß die Beschichtung durch Aufbringen mit einer Kati onen-organischen Verbindung und/oder Solen und anschließender Strahlmahlung, bevorzugt Dampfstrahlmahlung, erfolgt.

10. Verwendung der Rohstoffmischung gemäß einem oder mehrerer der Ansprüche 1 bis 9 zur Herstellung von keramischen Werkstoffen und Bauteilen.

11. Verwendung der Rohstoffmischung gemäß einem oder mehrerer der Ansprüche 1 bis 9 zur keramischen Formgebung über die elektrophoretische Abscheidung.

12. Verwendung der Rohstoffmischung gemäß einem oder mehrerer der Ansprüche 1 bis 9 zur Herstellung von keramischen Schichten oder Bauteilen über den Weg des Flammspritzens oder des Plasmaspritzens.